Europäisches Patentamt

European Patent Office

Office européen des brevets

(11) Publication number: **0 408 222 A1**

# (12) EUROPEAN PATENT APPLICATION

(21) Application number: 90307138.9

(22) Date of filing: **29.06.90**

(51) Int. Cl.5: **B01D 61/18, G01N 33/558**

(30) Priority: **12.07.89 US 378786**

(43) Date of publication of application:
**16.01.91 Bulletin 91/03**

(84) Designated Contracting States:
**AT BE CH DE DK ES FR GB GR IT LI LU NL SE**

(71) Applicant: **KINGSTON DIAGNOSTICS, L.P.**
**2235-B Route 130**
**Dayton, New Jersey 08810(US)**

(72) Inventor: **Thakore, Yatin B.**
**11 Rues Lane**
**East Brunswick, New Jersey 08816(US)**
Inventor: **Swanson, Karen L.**
**16 Dark Leaf Drive**
**Hamilton, New Jersey 08610(US)**

(74) Representative: **Ablewhite, Alan James et al**
**MARKS & CLERK 57/60 Lincoln's Inn**
**Fieldslds**
**London WC2A 3LS(GB)**

(54) **Device and method for separation of fluid components.**

(57) The present invention involves a method and device for separating fluids from one another in a liquid mixture, and especially for separating undesirable components from the liquid mixture to obtain one or more desirable components for subsequent use. A sample of the liquid mixture is first applied to a physical transport medium which moves at least a portion of the liquid mixture from a remote location thereon to a second location thereon and in contact with a first surface of a microporous separation membrane. This movement is achieved by gravity, absorption or capillary action and the physical transport medium may be a sheet of fabric with weave or otherwise or a channeled or grooved synthetic material. Once a portion of the liquid mixture has moved to the first surface of the microporous separation membrane, one or more undesirable components are separated from one or more desirable components and the desirable components are absorbed and pass through the membrane. The desirable component(s) reach the second (opposite) surface of the micrcporous separation membrane and contact a collecting membrane. This collecting membrane collects the desirable components for further use, e.g. it may be capable of reacting with at least one of the desirable components to display at least one chemical reaction characteristic thereof. For example, colorimetric reaction may take place and color intensity may indicate concentration level or other quantitative or qualitative characteristic.

# DEVICE AND METHOD FOR SEPARATION OF FLUID COMPONENTS

## BACKGROUND OF THE INVENTION

### 1. Field of the Invention

The present invention is directed to a device and a method for separating fluid components from one another and especially undesirable components from desirable ones. More specifically, the present invention is directed to separation of one or more undesirable components from a liquid mixture to obtain one or more desirable components for further use, e.g. identification of the component, testing or otherwise performing operations thereon or therewith.

### 2. Prior Art Statement

In many applications such as therapeutics, plasma/ serum standards, pollution or contaminant testing, pH testing, color testing, ion concentration testing, isomer testing, quality control evaluation, etc. there is often a need to separate one or more undesirable components from a liquid mixture to obtain desirable component(s) in furtherance of these applications. Other applications are within the purview of the artisan whereby such separations may be necessary or useful. Many separation techniques are available in the prior art, including filtering, reacting, ionizing, centrifuging, etc. However, simple techniques for fast yet reliable separation are lacking. While not limited to the testing of blood, the relative benefits of the present invention over prior art techniques are described as exemplary.

When using whole blood analyte determination techniques, it is essential to remove the red cells from the blood so that the color of the reaction is not masked by the color of the blood. Centrifugation of the blood or the clotting of blood are two common prior art methods used to isolate plasma or serum from whole blood. However, these result in an additional sample preparation step. It would appear that since red blood cells are rather large (about 8 microns in diameter), one could conceivably use a microfilter of a smaller pore size to obtain clear plasma. However, this does not usually work for the following reasons:

(a) When a drop of blood is placed on a dry hydrophilic membrane with 3 to 8 micron pore sizes, rapid absorption results in hemolysis of blood wherein the fragile red blood cells rupture and the broken cells and/or hemoglobin from the cells leak through. As a result, generally, the plasma coming through may not be clear but reddish. Also, blood may start clotting in the membrane further promoting the clogging, hence yielding unreliable results.

(b) When a drop of blood is placed on a hydrophilic microporous membrane with pore sizes of less than 3 microns, the clogging on top of the membrane appears to be especially rapid and usually negligible plasma gets through. The same problems as mentioned above with clogging are encountered.

(c) Using a depth filter in addition to or in place of the microfilter may likewise be problematic. Due to higher hold up and absorptive capacity of the depth filter, volume requirements of blood become rather excessive and the problems of hemolysis and clogging still exist. An exception to this is the depth filter made up of glass fibers which was shown to separate plasma/serum from blood rather effectively. This method is described in United States Patent No. 4,477,575. However, many of the problems of other "dry" membrane systems remain, although to a lesser degree.

In order to overcome the problems of dry membrane test systems, numerous wet or semi-wet microporous membrane test systems have been proposed. Thus, when wetted with water or with aqueous solutions, the microfibers of these hydrophilic membranes are hydrated by a thin layer of water. This significantly reduces the absorptive capacity of the membrane. It is possible to get fairly clean components across this wetted microporous membrane of pore sizes of about 5 microns or less in this fashion. However, wet and semi-wet systems have three major drawbacks. First, this may involve wetting the membrane prior to use and this adds an additional step for a diagnostic test. Second, when dealing with small volumes of a few microliters, as are encountered in diagnostic tests, this would dilute the component and the extent of dilution would depend upon the volume of sample. Last, in a wet membrane, the rate of transport of material through the membrane will be governed by diffusion rather than capillary pull and may take an excessively long time thereby affecting the overall response time of a diagnostic test.

The discovery that certain depth filters made up of glass fibers could successfully separate red cells from whole blood (U.S. Patent No. 4,477,575) paved the way for successful commercialization of an instrument called "Reflotron" by Boehringer Mannheim Diagnostics (Trademark) where the separation of clear serum or plasma occurs within the dry strip itself without need of an external force such as pressure or centrifugation. This made analysis of various analytes possible from whole blood in a simple inexpensive manner. However, although blood analysis with Reflotron is convenient, a metered amount of blood must be placed onto the reagent pads and there is a need to crush the pad to bring all the reagents into intimate contact with the separated serum/plasma. Additionally, it can perform only one reaction at a time and typically the chemistries take about three minutes each.

Thus, while many new developments have occurred and have been patented, the need for a convenient, efficient, easy-to-use, reliable test method and device for testing one or more analytes from whole blood plasma has not been satisfied.

Many other separation requirements in liquid mixture operations have similar drawbacks which are unique to the particular constituents, yet can be improved by the device and method of the present invention.

## SUMMARY OF THE PRESENT INVENTION

The present invention involves a method and device for separating fluids from one another in a liquid mixture, and especially for separating undesirable components from the liquid mixture to obtain one or more desirable components for subsequent use. A sample of the liquid mixture is first applied to a physical transport medium which moves at least a portion of the liquid mixture along the physical transport medium from a remote location thereon to a second location thereon and in contact with a first surface of a microporous separation membrane. The primarily tangential movement is achieved by gravity, absorption or capillary action and the physical transport medium may be a sheet of fabric with weave or otherwise or a channeled or grooved synthetic material. Once a portion of the liquid mixture has moved to the first surface of the microporous separation membrane, one or more undesirable components are separated from one or more desirable components and the desirable components are absorbed and pass through the membrane. The desirable component(s) reach the second (opposite) surface of the microporous separation membrane and contact a collecting membrane. This collecting membrane collects the desirable components for further use, e.g. it may be capable of reacting with at least one of the desirable components to display at least one chemical reaction characteristic thereof. For example, colorimetric reaction may take place and color intensity may indicate concentration level or other quantitative or qualitative characteristic.

## BRIEF DESCRIPTION OF THE DRAWINGS

The present invention described herein is more fully appreciated and understood when the disclosure is taken in conjunction with the appended drawings, wherein:

Figure 1 shows a side cut view of a present invention device which includes a support substrate, a lateral physical transport medium, a microporous separation membrane and a collecting membrane;

Figure 2 shows a top diagramatic view of the device shown in Figure 1;

Figure 3 shows an alternative embodiment present invention device utilizing a channeled substrate as the physical transport medium;

Figure 4 shows another alternative embodiment present invention device wherein the physical trans port medium is a combined channeled substrate and capillary action transport membrane;

Figure 5 illustrates the top view of an alternative present invention device;

Figure 6 illustrates a side view of a present invention device having multiple collecting membranes for determining three different component characteristics; and,

Figure 7 illustrates a present invention device which includes radially arranged collecting membranes which permit determination of four different component characteristics.

## DETAILED DESCRIPTION OF THE PRESENT INVENTION

The present invention is directed to obtaining desirable components of liquid mixtures in microliter quantities rapidly, efficiently, and without causing dilution, destruction, or contamination of the desirable components. Separation and movement of components are achieved without relying on externally applied forces or without any sample pretreatment. It is also directed to the process of and device for separation of one or more components from a liquid mixture for determination of qualitative and/or quantitative characteristics or for other subsequent use of the desirable components. Thus, the separation method can be utilized for therapeutics, plasma/serum standards, pollution identification and/or testing, pH testing, isomer testing, water hardness, water mineral content or water contaminant testings, laboratory analysis, separation and chemical reaction, quality control of liquid mixtures, pH testing of liquids, ion separation and determination, shelf life determination, urine testing, other bodily fluid testing, etc. In fact, the present invention method and device may be used for the separation of components from any liquid mixture in which components are subject to separation by membrane. Thus, "liquid mixture" as used herein means a mixture which is flowable and has one or more components which are separable by membrane separation and in which at least one of the components is liquid phase. Included would be aqueous solutions, slurries, multicomponent suspensions, impure water, bodily fluids, liquid-liquid mixtures, non-aqueous solutions, flowable monomer and/or polymer mixtures, etc. Further "components" as used herein may themselves be solid(s), liquid(s) or liquid(s) with ions and/or solids suspended or dissolved therein.

The devices of this invention enable desirable component(s) to come into intimate contact with a collecting membrane for subsequent use such as testing or analyzing such as suggested above. The collecting membrane may contain active chemicals, ions, enzymes, proteins, chromogens or other reagents and movement and subsequent reaction is achieved without external pressure. The separation strip device of this invention also enables one to do multiple chemistries on the same strip with a single sample application in a very quick, simple and reliable manner.

Primarily, the present invention relies upon application of a liquid mixture at a first (remote) location on a physical transport medium and movement of at least a portion of the mixture to a second location on the medium to contact a separation membrane for separation of undesirable and desirable components. Typically, the present invention utilizes tangential flow of the liquid mixture underneath a suitable microporous separation membrane so that the undesirable component(s) are retained on the underside but desirable component(s) are obtained on the top surface of the separation membrane. Capillary pressure, both within the membrane matrix and by suitable channels and/or a suitable open mesh underneath the microporous membrane may provide the appropriate driving force for the tangential flow and no external forces are necessary. For filtration of highly viscous liquids or for slurries or suspensions with high solids content, tangential flow across the membrane is much more efficient than the dead-ended filtration. The problems of clogging of the membrane are substantially reduced in tangential filtration mode. In this system, a viscous fluid or suspension is swept across one side of the membrane, and clean filtrate is collected across the other side.

This invention uses this principle, for a separation strip, on a miniature scale. For small volumes of liquid mixture which can be obtained by eyedropper or the like, the driving force for the liquid mixture may be provided entirely by the capillary pull. To do this efficiently, it relies heavily on both the pore-structure of the separation membrane and the physical transport medium and, where applicable, on the support structure underneath it. Additionally, the choice of the microporous separation membrane is important. An ideal separation membrane should wet easily with the liquid mixture, should not allow the undesirable component(s) to migrate to the top surface, should not cause destruction or breakdown of the component(s), should have a good capillary pull and have a fairly uniform pore-structure near the surfaces. There are several dozen commercial microporous separation membranes which are available and the actual selection of a particular separation membrane for a particular liquid mixture application is within the purview of the artisan.

Other important components of this invention are the physical transport medium and the substrate onto which this microporous separation membrane is placed. Typically, this membrane is placed on a plastic substrate and between this substrate and the membrane is placed a physical transport medium which may be a material with open structure and, in cases involving aqueous mixtures, a hydrophilic surface. Examples of materials with such open structures are various types of polymeric meshes, cloth, tissue papers, gauze etc. Ideally the hold up volume and the absorptive capacity of these open-structured materials should be very small so as to minimize the loss of liquid due to absorption and the surface on a macroscopic scale should be fairly smooth so as to provide good contact with the microporous separation membrane. Woven fabrics from many monofilament yarns such as polyester and nylon are particularly useful. Even though the pore sizes of the support structures are not critical, it would be preferable to have them at least an order of magnitude larger than that of the microporous separation membranes, so that these substrate materials do not have any sieving properties and so that their sole function is to assist in smooth and rapid flow of liquid. As a further aid for rapid movement of blood underneath the microporous separation membrane, channels of well-defined geometry or grooves may be included on the plastic substrate, underneath the open-structured material. Channels may vary in size, depending upon the application. For example, channels 1 to 10 mm wide and 1 to 15 mil (25 to 225 micron) deep work quite well for bodily fluids, with 1 to 4 mm width and 2 to 10 mil depth being the preferred range for blood serum, for example. However, as mentioned, size selection is within the skill of the artisan.

In practice, an open-structured material such as a monofilament woven fabric is placed onto the plastic substrate with or without the channels, and the microporous separation membrane is placed on the top such that part of the fabric extends beyond the membrane. A collecting membrane such as a piece of filter paper, non-woven or woven sheet or other membrane is placed on top of the microporous separation membrane. This collecting membrane will absorb the desirable liquid(s) as it comes through the microporous separation membrane and may be loaded with reagents specific for a given test or reaction, if desired. This whole assembly may optionally be secured by placing another plastic cover on the top. A liquid mixture sample applied to the physical transport medium through an orifice in the plastic cover at a location remote from the separation membrane, migrates along to a location next to (under) the microporous separation membrane, thereby creating a thin film of liquid mixture along one surface of the microporous separation membrane. Desirable liquid(s) available from the top surface of this membrane saturate the collecting membrane and if it is loaded with reagents, the desirable liquid reacts with these reagents producing color or other characterization.

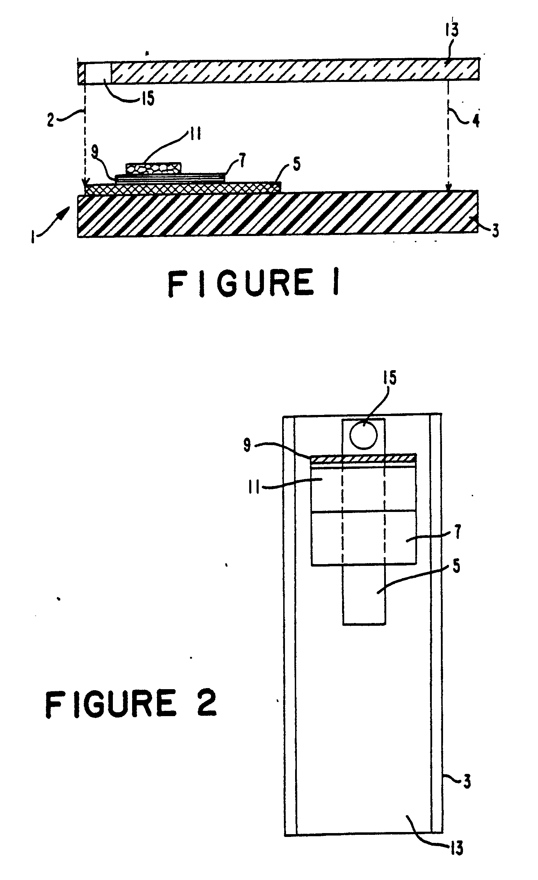

Referring now to Figures 1 and 2, there is shown a side cut view and a top view of present invention test strip device 1. The device 1 has an inert substrate 3 and a physical transport medium 5 attached thereto. In this embodiment, physical transport medium 5 is a woven cloth material. Atop physical transport medium 5 is microporous separation membrane 7 and optional hydrophobic barrier strip 9, adjacent thereto as shown in both figures. Of less length and placed atop of microporous membrane 7 is collecting membrane 11. Clear plastic cover 13 with orifice 15 is adhered over the tops of the other components as shown by the arrows 17 and 19 in Figure 1. Top view Figure 2 shows all of the components, at least in part, due to the fact that cover 13 is clear.

As now can be seen, the user simply places a drop of a liquid mixture in orifice 15 ( a remote location from microporous separation membrane 7 ). The liquid mixture flows down physical transport medium 5 and under microporous separation membrane 7 to a first (bottom) surface thereof. Desirable liquid(s) separate and flow upwardly through membrane 7 and, at this point, are essentially free of any undesirable liquids which have been separated out. Then it migrates to a second (opposite, i.e. top) surface of membrane 7 to collecting membrane 11. Here the desirable liquid(s) may be stored, examined, aged, tested, reacted or otherwise used as desired. For example, in this case, test membrane 11 may contain reagents specific for the acidity or other characteristic(s) of the liquid(s), of interest. In the case of blood serum testing, chromogens which reveal colorimetric measurement of cholesterol, glucose or the like may be included.

In general, the essential components of the present invention device are the physical transport medium, the microporous separation membrane, and the collecting "membrane". Although not preferred, a microporous separation membrane may be extended and graded to act both as a transport medium and a separation membrane. However, more leeway as to liquid volume, dimensions and "overflow" control are achieved when the physical transport medium is one or more components which are elements separate and different from the microporous separation membrane. Likewise, the transport medium may act as a substrate or a separate, inert and inactive substrate may be utilized.

The combination of a separate physical transport medium and a separation membrane is chosen such that when liquid mixture is placed at the remote liquid application area, it is rapidly pulled underneath the microporous membrane and desirable liquid(s) seep across this membrane and saturate the collector (collecting membrane). Further, the collecting membrane itself may be a single layer or may be a compilation e.g., a reagent containing layer as well as a chromogen containing layer which is preferably a porous hydrophilic layer. The enzymes or reagents in these layer(s) dissolve in the desirables and react with them producing color. This type of system is particularly appropriate for determining blood analytes such as glucose, cholesterol, triglycerides, uric acid, creatinine, alcohol, creatine kinase, cholinesterase, AST, ALT, etc. wherein an enzyme or a series of enzymes convert an analyte to hydrogen peroxide which then reacts with chromogen, contained in the collecting membrane. Many of the enzymes used in such diagnostic s rips are particularly susceptible to denaturation when contacted by many chromogens for an extended period of time. By separating the enzymes and the chromogens in two separate layers and yet keeping them in close proximity, the long term stability of the reagents can be preserved. For analyzing analytes such as albumin or other proteins, amylases, calcium, inorganic phosphorus, etc. wherein the reagents used are not biomolecules such as enzymes or antibodies but are stable chemicals and the color formed is due to selective complexation of the analyte with the reagents, the porous layer can be eliminated and all the reagents can be combined in a single layer membrane. It is also possible to load some of the reagents elsewhere in the system such as in additional layers, although this is not essential, provided that they don't damage the liquid(s) e.g. in the case of blood, hemolyze the cells or damage them in any way. It is best to view the final color at the top of the test membrane since it also acts as a hiding layer to mask the color of the original liquid mixture. In order to avoid the bleedthrough of color developed during the test downstream from the device onto the collecting membrane, an optional hydrophobic material or glue can be applied on the exposed edge of the separation membrane just downstream of the physical transport medium as shown in Figures 1 and 2. Such a hydrophobic surface barrier prevents the color from diffusing down the separation membrane, but is not always necessary.

In the alternative, when a collecting membrane having a first reactant (reagent) and second reacting component (chromogen) is used, a single collecting membrane instead of a plural layer may be used. Thus, in some embodiments, the reagents and chromogens may be contained in dry or semi-wet form or even wet form in the same membrane structure, or one or the other may be encapsulated or otherwise isolated within the same membrane.

Further, the present invention device may be used without any additional sample preparation for detection of certain blood or other analytes which normally requires a precipitation step for removal of interfering analytes. The precipitants, for example, can be incorporated within the microporous separation membrane or in the physical transport medium, so that the precipitation step occurs on-line and the plasma reaching the collecting membrane is free of the interferent. If, due to the nature of the precipitant, it is advisable not to have direct contact of the precipitant with the blood, then an additional layer containing the precipitant can be placed between the separation membrane and the physical transport medium. An application that makes use of the precipitation step is the measurement of high density lipoprotein cholesterol (HDL cholesterol) which typically needs precipitation steps using precipitants such as polyethylene glycols, dextran sulfate, or magnesium tungstate to precipitate out cholesterol in low density and very low density lipoproteins (LDL and VLDL), followed by centrifugation. The present invention device achieves this on-line by loading the precipitant into the microporous separation membrane.

These devices are self-monitoring because a microporous membrane cannot be over-filled or over-saturated by capillary filling. Once the collecting membrane is saturated, the excess liquid mixture ( with desirable liquid(s) ) simply migrates down the transport medium. If, for some reason, the sample volume is so large as to exhaust the absorptive capacity of the transport medium, then the excess liquid mixture will merely stay at the application area without getting absorbed. In case the sample volume is not enough, then only part of the collecting membrane will be saturated and used as desired. The precise control over the thicknessess (and hence the void volume) of the test membrane is not critical because even if the saturation capacity of this membrane varies with the thickness, the concentration of any reactants in the desirables, and hence the intensity of the final results produced may intentionally be independent of the thickness of this membrane. The minimum volume needed to saturate the collecting membrane with desirables will depend on the thickness of this membrane, the geometry of the system, the nature of the desirables and its ultimate use.

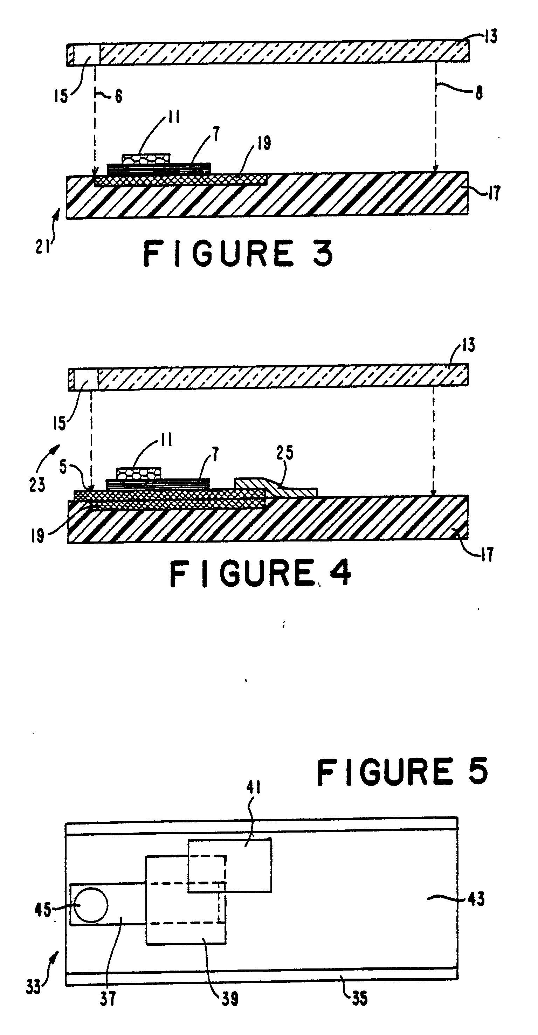

Figure 3 shows a present invention device 21, which is similar to the one shown in Figures 1 and 2 and like parts are like numbered. Note that physical transport medium 19 is now channels or grooves established in substrate 17 itself. Arrows 6 and 8 show assemblage.

Figure 4 likewise shows a device 23 with like parts being identically numbered, and here, both the cloth physical transport medium 5 of the Figure 1 device and the grooved physical transport medium 19 of the Figure 3 device are combined. Additionally, absorbant storage medium 25 rests in part on transport medium 5 and on substrate 17. This optional storage medium may be used to absorb additional (excess) liquid mixture to draw the excess past the separation membrane 7. Any liquid absorbing material may be used, although this is not an essential feature of the invention.

Figure 5 shows present invention device 33 which has substrate 35, physical transport medium 37 (e.g. a sheet material such as a gauze or synthetic having the necessary capillary action), located on substrate 35, separation membrane 39 over physical transport medium 37, and collecting membrane 41 which is partly over the separation membrane 39 and partly located directly on substrate 35, as shown. This arrangement permits the use of a very thin separation membrane which may show through some of the original liquid mixture color. By offsetting part of the test membrane, the isolated portions will show true colorimetric readings without a shaded background. Top cover 43 with orifice is clear plastic and the user uses this strip in the same manner as described above.

Advantageously, the present invention method and device may be used for a plurality of simultaneous purposes, e.g. multiple testings. Thus, it is possible to combine various chemistries on the same device. This is particularly advantageous for example in testing on-site in doctor's office, where a patient needs to be checked for several analytes to diagnose a condition or at a pollution site, chemical pond, spill or the like where on site broad classification information preliminary to determining procedures for further testing is used.

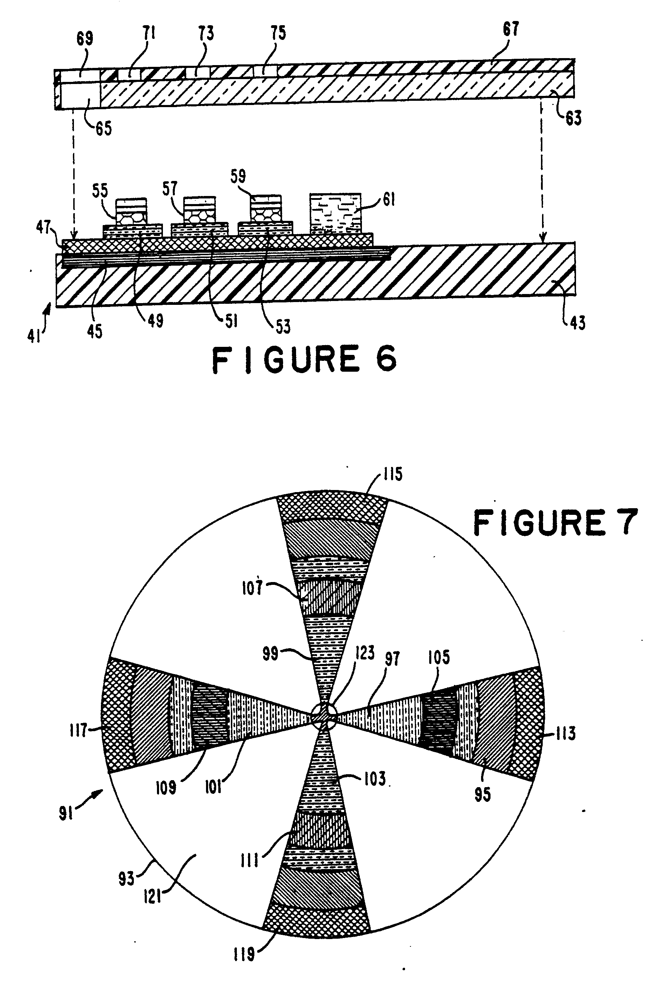

In the strips of this invention, several related tests can be combined on the same strip and determination of multiple results can be made within a few minutes from application of a liquid mixture sample. Thus, Figure 6 shows one geometry combining a lipid panel (cholesterol, HDL cholesterol and triglycerides) onto a single strip. There is shown in Figure 8 device 41 having substrate 43. The physical transport medium in this embodiment includes channels 45 located on substrate 43 as well as sheet 47 located above channels 45. Three microporous plasma separation membranes 49, 52 and 53 are spaced apart and located on sheet 47 as shown. Atop each of the separation membranes 49, 51 and 53 are multilayer plasma collecting test membranes 53, 57 and 59 respectively. The plasma collecting test membranes 55, 57 and 59 contain the necessary reactants for three different analytes, in this case cholesterol, HDL cholesterol and triglycerides respectively. Optional absorbant storage medium 61 is also included. The top cover in this embodiment includes a first clear plastic layer 63 with orifice 65 and an opaque layer 67 containing orifice 69 for blood sample transmission and orifices 71, 73 and 75 for visual comparison for colorimetric measurements of the respective analyte reactions at test membranes 55, 57 and 59.

Figure 7 shows a different geometry for obtaining plural test result characteristics and, in this case, contains four different analyte tests. Thus, device 91 includes substrate 93 and, in a large radially expanding cross, physical transport medium 95 which is placed on top of substrate 93 and extends radially from the center to approximately the outer edge of substrate 93 and under all other components hereafter described. Atop physical transport medium 95 are four separate microporous plasma separation membranes 97, 99, 101 and 103. Atop a portion of each of these are plasma collecting test membranes 105, 107, 109 and 111, respectively, and these in turn contain reactants for colorimetric determination for four different analytes such as glucose, cholesterol, HDL cholesterol and triglycerides. Optional absorbant storage media 113, 115, 117 and 119 are placed on top of the outer ends of physical transport medium 95. Clear plastic cover 121 is placed on top of all the other components and has a single orifice 123 for blood sample application in the center as shown. This device 91 permits nearly simultaneous testing of four different analytes by application of a single blood drop.

The following examples further support the effectiveness of the present invention:

Example 1

The type of device shown in Figures 1 and 2 is made for testing bacteria in murky water. The collecting membrane is seeded with colorimetric bacteria indicating reagent. The separation membrane is of a size chosen to filter out the murky color contaminents. A water sample is applied to the application area, some of which moves along the physical transport medium. At the separation membrane, the murkiness is removed and clear water surfaces at the top of the collecting membrane, showing a colorimetric bacteria count.

Example 2

A device such as is shown in Figure 3 is made for pH testing of colored liquids. The purpose is to remove the color pigment before pH testing. The separation membrane is chosen to remove pigments and permit only clear liquid to the collecting membrane so that accurate litmus type testing is achieved.

Example 3

A device such as that shown in Figures 1 and 2 is prepared for testing blood, except that tissue paper is used as the physical transport medium to facilitate the flow of blood underneath a 5 micron pore-size nitrocellulose separation membrane (Type AE98, Schleicher and Schuell). The plasma collecting test membrane in this case is a 0.45 micron nylon 6.6 membrane. It is advantageous to use for the test membrane a microporous membrane of a pore size smaller than the plasma separation membrane for plasma collection; it will then also act as a secondary membrane in case the primary membrane has some defects. A drop of blood (20-40 microliters in volume) is placed at the blood application area and within about 1 to 2 minutes the plasma collection membrane gets saturated with clear plasma.

Example 4

A Figure 3 type of device is constructed wherein the bottom support plastic has a 3 mm wide and 5 mil deep channel built in. No open structured material is used as a blood transport material. To prevent the blood from going over the plasma separation membrane, a hydrophobic tape is put on the top surface of this membrane. The plasma separation membrane is the very same as in Example 3. When a drop of blood is placed on the blood application area, clear plasma saturates the plasma collecting test membrane in about 1 minute.

Example 5

A Figure 4 device with a geometry utilizing both the channels and an open mesh is made. The channel geometry is the same as in Example 4 but a woven fabric from monofilament polyester is used to facilitate the transport of blood. The plasma separation membrane is of the same type as in Example 3. When a drop of blood is placed on the blood application area, clear plasma saturates the plasma collection membrane in about 10 seconds.

Example 6

The same geometry as shown in Example 5 is used except that the plasma separation membrane is 8 micron nitrocellulose (Type AE97, Schleicher and Shuell). The plasma collecting test membrane is saturated in about 10 seconds.

Example 7

The same geometry as in Example 6 is used except that cellulosic membrane (Micron Separations, Inc.) is used for the separation membrane. The plasma collecting membrane is saturated within 30 seconds.

Example 8

In the geometry of Example 5, an additional filter paper is introduced to serve an an absorption pad to soak up excess blood as shown in Figure 5. The rest of the components are the same as in Example 3. Blood samples from about 15 to 100 microliters are placed in the blood application area and the plasma collection membrane is saturated in about 10 seconds.

Example 9

A filter paper (collecting membrane) is used as a collection membrane and placed on a component separation membrane of the type of Figure 1. A drop of blood (approximately 40 microliters) is placed at the sample application area. The device separates out the blood cells and the filter paper is saturated with clean plasma. The filter paper is then removed from the device and the pH of blood plasma is tested by pressing the wet filter paper against a pH paper which changes color at increments of 1 pH unit. The pH of the plasma, as would be expected, is found to be between 7 and 8 from comparisons with the color chart.

Example 10

Example 9 is repeated, except that pH paper is used as the collecting membrane instead of the filter paper. The testing is repeated and plasma is collected at the pH paper collecting membrane. In a very short time, the collecting membrane changes color to show pH as between 7 and 8. In contrast, when blood is applied directly on the filter paper it becomes red, making it impossible to determine the pH level of blood.

Example 11

A suspension of blue dye Intrapel Blue 12 (Crompton and Knowles) is made in an aqueous buffer at pH 3. On the device of Figure 3, a filter paper is used as a sample collecting membrane and a drop of aqueous suspension is placed at the sample application area. Filter paper collects clean colorless buffer which when tested for pH by pressing it against a pH paper shows a pH of 3. This device is useful for separating out particles which may contribute to turbidity/color to the sample and interfere with a test such as acidity.

Examples 12 - 20

Examples 12 through 20 are illustrative of the geometry, assembly and functioning of the devices for blood testing. In these illustrative examples, a 5 micron nitrocellulose membrane is used as the plasma separation membrane, 0.45 micron pore-size nylon 6.6 membrane as the plasma collecting test membrane and a woven polyester mesh as the physical transport medium to facilitate the transport of blood, lens tissue-paper or a dialysis membrane of 10.000 dalton cut-off (Spectra-por) is used to load the chromagen, white PVC or polystyrene plastic (15-25 gauge) is used as the substrate and a clear PVC or vinyl plastic (8-12 gauge) is used as the top cover. Glues such as polybutene or silastic or PVC based, or medical grade double-stick tape, all of which are relatively inert toward the chemistries, are used in these devices to provide either a hydrophobic barrier or a good seal. The chromogen which may be used in conjunction with the various chemistries involving enzymes as the reagents is $3,3', 5,5'$ tetramethylbenzidine dihydrochloride (TMBD) which in the presence of horseradish peroxidase gives bluish green color when it reacts with hydrogen peroxide generated from the reactions of the analyte. TMBD can be substituted by a number of other chromogens such as phenol or its derivatives and 4 amino antipyrine, or a number of leuco dyes, e.g. from arylmethine family (e.g. leuco malachite green) or by solubilized reactive dyes in their leuco form. The porous lower layer of the test membrane is soaked into the solution of the chromogen and allowed to dry. Typically this solution consists of 0.3g TMBD, 0.5g of sodium cholate, and 0.5-2g of polyethylene glycol (PEG) (molecular weight 8000 daltons) dissolved in 20 ml of reagent alcohol and 0.1M pH 3 phosphate buffer (3:1 by vol). The top layer of the test membrane is tissue paper soaked in the chromogen solution and upon drying stays tacky due to a combination of sodium cholate and PEG. This tackiness enables it to have an intimate contact with the reagent lower layer. To load the reagents, reagent solutions in appropriate buffers are made at the desired concentrations and the membrane is either soaked into this solution or the solutions pipetted onto the membrane till it is saturated. The membrane is then allowed to dry at room temperature. Typically the reagent membrane needs 10 microliter of reagent solution per square cm area for saturation.

Example 12

Test strips for measurement of total cholesterol are made as per Figure 4 where the reagent membrane contains the enzymes for cholesterol as described above. Blood or serum samples ranging in volume from 10 to 40 microliter are placed at the blood application area. Typically it takes about 10 to 15 seconds to saturate the test membrane and in about 30 seconds the color is fully developed which is then read in a reflectance meter or compared to a color chart.

Example 13

Test strips of cholesterol are made as per the geometry of Figure 4 and with the reagent composition as described above. Samples of whole blood ranging in volume from 15 to 50 microliters are applied at the blood application area. The color development typically is complete in about 30 to 45 seconds.

Example 14

HDL cholesterol strips are made as per geometry of Figure 4. The only difference between the cholesterol strips of Example 12 and the HDL strips is that the plasma separation membrane 1 in this case is first soaked in an aqueous 20% by weight solution of PEG 2000 ( a precipitating agent for LDL and VLDL cholesterol ) and allowed to dry prior to use. 10 to 40 microliter samples ( whole blood, serum or plasma ) are applied at the sample application area and color development is complete in about 1 minute.

Example 15

Triglyceride strips are made as per the geometry of Figure 4 and the test membrane is loaded with the enzymes as described above. 10 to 40 microliter samples ( whole blood, serum or plasma ) are applied at the sample application area and color development is complete in about 1 minute.

Example 16

Glucose test strips are made as per the geometry of Figure 4 wherein the test membrane is loaded with the enzymes as described above. 10 to 40 microliter samples ( whole blood, serum or plasma ) are applied at the sample application area and color development is complete in about 30 seconds.

Example 17

Test strips for the lipid measurement are prepared as shown in Figure 6. The three test membranes for individual geometries are as described above and the separation membrane for HDL cholesterol is treated with PEG as in Example 9. 40 to 100 micro liter samples ( whole blood, serum or plasma are applied at the sample application area and color development is complete in about 3 minutes.

Example 18

Test strips for the lipid measurement are made as per the geometry of Figure 6. 40 to 100 microliter samples are applied at the sample application area and the color development typically takes about 1 minute.

Example 19

Devices for simultaneous measurement of cholesterol ( total and HDL ), glucose and triglycerides are prepared as per the geometry of Figure 7. 50 to 100 microliter samples ( whole blood, serum or plasma ) are applied at the sample application area and color development is complete in about 2 minutes.

Example 20

Devices for the measurement of total cholesterol and HDL cholesterol are made. 20 to 80 microliter samples are applied at the sample application area and the color development is complete in about 1 minute.

Examples 21 - 28

In the following Examples 21 - 28, the enzymes and chromogens are loaded in a single layer plasma collecting test membrane. The chromogen is 3,3´, 5,5´ tetramethyl benzidine which is dissolved at a concentration of .03g/ml in acetone or at about .02 g/ml in a 3% solution of phenol in toluene. The enzymes for cholesterol are loaded from their aqueous solutions as described above and the test membranes are allowed to dry. After drying, the test membranes are loaded with chromogen solution ( either toluene or acetone based ) and again allowed to dry. The geometry used in testing is as shown in Figure 5, except that the separate chromogen layer is eliminated and additionally an aperture is provided on the top plastic cover over the plasma collecting membrane to allow for oxygen, since the reactions seem more sensitive to oxygen requirements than when the chromogen is loaded separately in another matrix. For aesthetic purposes and to protect the reagent area from outside contamination, an air-permeable membrane, such as a thin (~ 20 micron thick ), transparent polyurethane membrane coated on one side with porous adhesive (e.g. from Acutek, Inglewood, California) can be placed over the aperture. Such films are found to allow adequate transport of oxygen to the reaction zone.

Example 21

A nylon -6,6 membrane of 0.45 micron pore-size is loaded with cholesterol enzymes and chromogen from acetone solution. When blood or serum samples in volumes ranging from 15 to 50 microliters are applied at the blood application zone, in a Figure 5 type device, color develops in about 30 seconds and colors are accurately proportional to the cholesterol content.

Example 22

The same test is done as in Example 21 with a cellulosic test membrane of 0.2 micron pore-size. The chromogen, however, is loaded from its solution in toluene. Again similar results are obtained.

Example 23

The test of Example 21 is repeated. This time, however, after loading and drying with cholesterol enzymes, the test membranes are saturated with acetone, and after partial evaporation of acetone, a mixture containing 90:10 parts by volume of toluene and dodecane is added. After a few minutes of drying the test membrane, chromogen in toluene solution is applied. When the test membrane dries, the non-volatile dodecane component is left behind. These membranes are, therefore, not quite dry but contain the hydrophobic, non-polar dodecane and can be considered pseudo-liquid membranes. Non-polar liquids such as dodecane create a hydrophobic environment around the enzymes and give them added stability against denaturation and especially under humid environment. When tested, the performance is similar to above.

Example 24

The test of Example 21 is repeated but this time with a test membrane from HYPAN® multiblock polymer ( Kingston Technologics, Dayton, N.J. ) and described in U.S. Patents Nos. 4,331,783; 4,337,327; 4,369,294; 4,379,874; 4,420,589 and 4,370,451. This test membrane is made over a polyester cloth backing and contains approximately 5-10 mole % of acrylamide groups and the remainder are acrylonitrile groups. The structure of the test membrane is asymmetric with the pores on the more open side of being larger than 1 micron. When this membrane is tested as in Example 21, similar results are obtained.

Example 25

The same test as that in Example 23 is repeated with HYPAN membrane of Example 24. HYPAN membrane in this pseudo-liquid state shows similar behavior.

Example 26

The test of Example 21 is repeated with a microporous HYPAN membrane which is symmetric in structure. The membrane is impregnated on a polyester cloth support. The HYPAN membrane in this case has greater than 75 mole % of acrylonitrite groups, the remainder being glutorimide-derived groups. The pores on this membrane are in the range of .02-1 micron. The test results are similar to those in Example 21.

Example 27

The membrane of Example 26 is tried in a pseudo-liquid form as described in Example 23. Again similar successful results are obtained.

Example 28

A device of the type shown in Figure 3 is prepared for testing phenol type compounds from murky, oil/water mixtures. A filter paper soaked in a solution of horseradish peroxidase, 4-aminoantipyrine and hydrogen peroxide serves as the reagent membrane. The presence of phenol is indicated by the pink color (quinoimine dye) created by the oxidative coupling of phenol and 4-aminoantipyrine in the presence of hydrogen peroxide and peroxidase enzyme. Alternatively, reagents such as strontium peroxide, tartaric acid and calcium acetate can be used in place of hydrogen peroxide solution to generate hydrogen peroxide in-situ in presence of water, thereby enabling one to make a "dry" reagent pad. Hydrolyzable phenol moeities are present in many pesticide residues and such a test could be useful to check for toxic pesticide residues in a water supply.

Example 29

The device of Figure 6 is prepared with separate reagent membranes for testing free chlorine/bromine, total chlorine/bromine and pH of a liquid sample. Free chlorine/bromine and total chlorine/bromine reagent pads were utilized from Environmental Test Systems (Elkhart, Indiana) and a laboratory pH paper was used for pH pad. Such a device can be used for simultaneous testing of multiple analytes.

Obviously, numerous modifications and variations of the present invention are possible in light of the above teachings. It is therefore understood that within the scope of the appended claims, the invention may be practiced otherwise than as specifically described herein.

Claims

1. A device for separating one or more undesirable components from a liquid mixture other than blood and of obtaining one or more desirable components therefrom, which comprises:

(a) a microporous component separation membrane for applying a sample of said liquid mixture, indirectly, to a first surface of said microporous component separation membrane to effect separation of one or more undesirable components from the liquid mixture and to provide one or more desirable components and to effect movement of the separated desirable components to a second surface of said microporous component separation membrane;

(b) a component collecting membrane in intimate contact with the second surface of said microporous component separation membrane for receiving said separated desirable components, said collecting membrane being capable of absorbing and thereby recovering said desirable components for subsequent use; and,

(c) a physical transport medium contacted in part with said first surface of said microporous component separation membrane which medium is capable of moving at least a said liquid mixture from a remote location on said physical transport medium to said first surface of said microporous component separation membrane.

2. A device of claim 1 in which the component collecting membrane is capable of reacting with at least one component of interest to display characteristics thereof.

3. The device of claim 1 or claim 2 wherein said physical transport medium relies, at least in part, on capillary forces to move the liquid mixture.

4. The device of claim 3 wherein said physical transport medium is a transport membrane sheet.

5. The device of claim 4 wherein said transport membrane sheet is a sheet of fabric selected from woven fabric, non-woven fabric, gauze and monofilament yarn.

6. The device of claim 3 wherein said physical transport medium is provided with grooves or channels to promote movement of the liquid mixture.

7. The device of claim 3 wherein said physical transport medium is an open-structured mesh with openings of at least 1 micron in size.

8. The device of any of claims 1 to 7 wherein said microporous component separation membrane has a nominal pore size of about 0.02 to about 10 microns.

9. The device of claim 8 wherein said microporous component separation membrane is a skinned membrane.

10. The device of any of claims 1 to 9 wherein said microporous component separation membrane is cellulosic.

11. The device of claim 10 wherein said microporous component separation membrane is nitrocellulose.

12. The device of any of claims 1 to 11 further comprising:

(d) an absorbant storage medium connected to said physical transport medium wherein said physical transport medium moves excess liquid mixture to said absorbant storage medium to prevent excess liquid mixture from retarding the effectiveness of said component collecting membrane.

13. The device of any of claims 1 to 12 wherein said component collecting membrane includes one or more reactants which react with at least one of said desirable components to effect colorimetric reactions.

14. The device of any of claims 1 to 13 further including at least one inert substrate to which at least one of said mioroporous component separation membrane, said component collecting membrane and said physical transport medium is connected.

15. A device for obtaining one or more desirable components from a liquid mixture and determining desirable component characteristics thereof, which comprises:

(a) an inert substrate support;

(b) a physical transport medium attached to a surface of said support;

(c) a microporous component separation membrane having a first surface in contact with only a part of said physical transport medium and having a second surface opposite and away from said physical transport medium; and,

(d) a component collecting membrane in intimate contact with a portion of said second surface of said microporous component separation membrane capable of absorbing and thereby recovering said desirable components for subsequent use.

16. The device of claim 15 in which the component collecting membrane is capable of reacting with at least one desirable component of interest to display characteristics thereof.

17. The device of claim 15 or claim 16 wherein a portion of said physical transport medium with which said microporous component separation membrane is not in contact, is exposed for applying a sample of liquid mixture thereto.

18. The device of claim 16 or claim 17 which further comprises:

(e) a top sheet containing at least one aperture through which a liquid mixture may be applied onto the physioal transport medium, and at least a portion of this cover sheet overlying said collecting membrane, said portion being transparent areas to view one or more colorimetric reactions.

19. A method of separating one or more undesirable components from a liquid mixture other than blood and of obtaining one or more components of interest therefrom, which comprises:

(a) applying a sample of said liquid mixture to a physical transport medium at a remote location to effect movement of at least a portion of said liquid mixture from said remote location along said physical transport medium to a first surface of a microporous component separation membrane;

(b) contacting, via said physical transport medium, said first surface of a mioroporous component separation membrane with said portion of said liquid mixture to effect separation of one or more undesirable components from the liquid mixture and to effect movement of one or more desirable components to a second surface of said microporous component separation membrane; and

(c) contacting a component collecting membrane located at said second surface of said microporous component separation membrane, with said one or more desirable components thereby said test membrane being capable of recovering same for subsequent use.

20. The method of claim 19, using a device according to any of claims 1 to 18.

FIGURE 1

FIGURE 2

FIGURE 3

FIGURE 4

FIGURE 5

FIGURE 6

FIGURE 7

European
Patent Office

**EUROPEAN SEARCH
REPORT**

Application Number

**EP 90 30 7138**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 615 983  (M. KOYAMA)  – – – | | B 01 D 61/18 |
| A | EP-A-0 285 993  (SARTORIUS GmbH)  – – – | | G 01 N 33/558 |
| A | EP-A-0 271 854  (BOEHRINGER MANNHEIM GmbH)  – – – | | |
| A | EP-A-0 269 240  (BIOTRACK, INC.)  – – – – – | | |

| | TECHNICAL FIELDS SEARCHED (Int. Cl.5) |
|---|---|
| | B 01 D 61/00 |
| | G 01 N 33/00 |

The present search report has been drawn up for all claims

| Place of search | Date of completion of search | Examiner |
|---|---|---|
| The Hague | 19 October 90 | DEVISME F.R. |